# EUROPEAN PATENT APPLICATION

(11) **EP 3 038 312 A1**
(43) Date of publication of application: **29.06.2016**
(21) Application number: 13891838.8
(22) Date of filing: 23.08.2013
(51) Int. Cl.: H04L 29/06

(54) **DATA TRANSMISSION METHOD, USER EQUIPMENT AND PROXY EQUIPMENT**

(71) Applicant: Huawei Technologies Co., Ltd., Longgang District Shenzhen, Guangdong 518129 (CN)
(72) Inventor: ZHANG, Lixue, Shenzhen Guangdong 518129 (CN); GUO, Xiaolong, Shenzhen Guangdong 518129 (CN)
(74) Representative: Körber, Martin Hans
(86) International application number: PCT/CN2013/082204
(87) International publication number: WO 2015/024260

(57) **Abstract**

The present invention provides a data transmission method, user equipment, and a proxy device. The proxy device receives a first data packet encapsulated by using a first protocol stack, transforms the first data packet into a first data packet encapsulated by using a second protocol stack, and sends the first data packet encapsulated by using the second protocol stack to an application server, where the second protocol stack includes the TCP protocol, and the first protocol stack does not include the TCP protocol. With the use of the method and the devices provided in the present invention, network resources can be saved.

## Description

### TECHNICAL FIELD

The present invention relates to communications technologies, and in particular, to a data transmission method, user equipment, and a proxy device.

### BACKGROUND

A machine to machine (machine to machine, M2M for short) technology enables all machinery devices to have networking and communications capabilities, where M2M devices may include user equipments, communications networks, and application servers. For example, the user equipment may be a vending machine, a gas meter reading device, a water meter reading device, an electricity meter reading device, or the like; the application server may be a meter reading processing server for a water meter or an electricity meter; and the communications network may be a cellular network, a Wireless Fidelity (wireless fidelity, WiFi for short) network, a Zigbee (Zigbee for short) network, the Internet (Internet for short), or the like.

At present, a method for data transmission between user equipment and an application server is: the user equipment accesses a communications network via a base station in the communications network, and performs data interaction with the application server by using the communications network. Generally, for this type of meter reading service or monitoring service, the user equipment sends detection data of the user equipment to a central server, and reports a small data packet (tens of bytes) during each period, while more overheads are consumed for network signaling interaction.

For each small data packet, multiple signaling interaction processes are needed to implement data transmission. During each signaling interaction, the user equipment needs to perform a signaling interaction with the communications network. In an M2M network, a quantity of user equipments is quite large; therefore, the user equipments frequently interact with the communications network, occupying a large quantity of network resources and causing enormous pressure to the communications network.

### SUMMARY

A first aspect of the present invention provides a data transmission method, so as to prevent user equipment from frequently interacting with a communications network, thereby saving network resources.

Another aspect of the present invention provides user equipment, so as to prevent user equipment from frequently interacting with a communications network, thereby saving network resources.

Still another aspect of the present invention provides a proxy device, so as to prevent user equipment from frequently interacting with a communications network, thereby saving network resources.

A first aspect of the present invention provides a data transmission method, including:
receiving, by a proxy device, a first data packet encapsulated by using a first protocol stack;
transforming, by the proxy device, the first data packet into a first data packet encapsulated by using a second protocol stack; and
sending, by the proxy device, the first data packet encapsulated by using the second protocol stack to an application server, where the second protocol stack includes the Transmission Control Protocol TCP protocol, and the first protocol stack does not include the TCP protocol.

According to the foregoing aspect and any possible implementation manner, an implementation manner is further provided, where the method further includes:
establishing, by the proxy device, a TCP connection between the proxy device and the application server.

According to the foregoing aspect and any possible implementation manner, an implementation manner is further provided, where the first data packet encapsulated by using the first protocol stack and received by the proxy device is sent after one or more data bearers are established between user equipment and a gateway.

According to the foregoing aspect and any possible implementation manner, an implementation manner is further provided, where the sending, by the proxy device, the first data packet encapsulated by using the second protocol stack to an application server includes:
sending, by the proxy device, the first data packet encapsulated by using the second protocol stack to the application server by using the TCP connection and the one or more data bearers.

According to the foregoing aspect and any possible implementation manner, an implementation manner is further provided, where after the sending, by the proxy device, the first data packet encapsulated by using the second protocol stack to the application server by using the TCP connection and the one or more data bearers, the method further includes:
receiving, by the proxy device, a second data packet encapsulated by using a third protocol stack;
transforming, by the proxy device, the second data packet into a second data packet encapsulated by using a fourth protocol stack; and
sending, by the proxy device, the second data packet encapsulated by using the fourth protocol stack to the user equipment, where the third protocol stack includes the Transmission Control Protocol TCP protocol, and the fourth protocol stack does not include the TCP protocol.

According to the foregoing aspect and any possible implementation manner, an implementation manner is further provided, where after the sending, by the proxy device, the first data packet encapsulated by using the second protocol stack to the application server by using the TCP connection and the one or more data bearers, the method further includes:
releasing, by the proxy device, the TCP connection between the proxy device and the application server.

According to the foregoing aspect and any possible implementation manner, an implementation manner is further provided, where
the sending, by the proxy device, the first data packet encapsulated by using the second protocol stack to the application server by using the TCP connection and the one or more data bearers includes:
   sending, by the proxy device, first data packets that are encapsulated by using the second protocol stack and correspond to multiple user equipments to the application server by using the one data transmission bearer and the TCP connection, where the first data packets encapsulated by using the second protocol stack each include an Internet Protocol IP address and a TCP port number that is generated by the proxy device, and the TCP port number and the IP address are used by the application server to distinguish the data packets corresponding to the user equipments; or
   sending, by the proxy device, a first data packet that is encapsulated by using the second protocol stack and corresponds to one user equipment to the application server by using the one data transmission bearer and the TCP connection, where the first data packet encapsulated by using the second protocol stack includes an IP address and a TCP port number that is generated by the proxy device, the TCP port number and the IP address are used by the application server to distinguish the data packet corresponding to the user equipment, and the multiple data transmission bearers are distinguished by using a general packet radio service tunneling protocol GTP port number generated by the proxy device or by using a dedicated bearer number.

Another aspect of the present invention provides a data transmission method, including:
establishing, by user equipment, a bearer between the user equipment and a packet data gateway P-GW; and
sending, by the user equipment, a first data packet encapsulated by using a first protocol stack to a proxy device by using the bearer, so that the proxy device transforms the first data packet into a first data packet encapsulated by using a second protocol stack, and sends the first data packet encapsulated by using the second protocol stack to an application server, where the second protocol stack includes the Transmission Control Protocol TCP protocol, and the first protocol stack does not include the TCP protocol.

According to the foregoing aspect and any possible implementation manner, an implementation manner is further provided, where the method further includes:
receiving, by the user equipment, a second data packet encapsulated by using the fourth protocol stack and sent by the proxy device, where the second data packet encapsulated by using the fourth protocol stack is obtained by the proxy device after the proxy device transforms a received second data packet encapsulated by using a third protocol stack, where the third protocol stack includes the Transmission Control Protocol TCP protocol, and the fourth protocol stack does not include the TCP protocol.

Still another aspect of the present invention provides a proxy device, including:
a first transmitting unit, configured to receive a first data packet encapsulated by using a first protocol stack;
a protocol transforming unit, configured to transform the first data packet received by the first transmitting unit into a first data packet encapsulated by using a second protocol stack; and
a second transmitting unit, configured to send the first data packet encapsulated by using the second protocol stack by the protocol transforming unit to an application server, where the second protocol stack includes the Transmission Control Protocol TCP protocol, and the first protocol stack does not include the TCP protocol.

According to the foregoing aspect and any possible implementation manner, an implementation manner is further provided, where the proxy device further includes: a connection control unit, configured to establish a TCP connection between the proxy device and the application server.

According to the foregoing aspect and any possible implementation manner, an implementation manner is further provided, where the first data packet encapsulated by using the first protocol stack and received by the first transmitting unit is sent after one or more data bearers are established between user equipment and a gateway.

According to the foregoing aspect and any possible implementation manner, an implementation manner is further provided, where the second transmitting unit is specifically configured to send the first data packet encapsulated by using the second protocol stack to the application server by using the one or more data bearers and the TCP connection established by the connection control unit.

According to the foregoing aspect and any possible implementation manner, an implementation manner is further provided, where
the second transmitting unit is further configured to receive a second data packet encapsulated by using a third protocol stack;
the protocol transforming unit is further configured to transform the second data packet received by the second transmitting unit into a second data packet encapsulated by using a fourth protocol stack; and
the first transmitting unit is further configured to send the second data packet encapsulated by using the fourth protocol stack by the protocol transforming unit to the user equipment, where the third protocol stack includes the Transmission Control Protocol TCP protocol, and the fourth protocol stack does not include the TCP protocol.

According to the foregoing aspect and any possible implementation manner, an implementation manner is further provided, where the connection control unit is further configured to release the TCP connection between the proxy device and the application server.

According to the foregoing aspect and any possible implementation manner, an implementation manner is further provided, where
the second transmitting unit is specifically configured to send first data packets that are encapsulated by using the second protocol stack and correspond to multiple user equipments to the application server by using the one data transmission bearer and the TCP connection established by the connection control unit, where the first data packets encapsulated by using the second protocol stack each include an Internet Protocol IP address and a TCP port number that is generated by the proxy device, and the TCP port number and the IP address are used by the application server to distinguish the data packets corresponding to the user equipments; or
the second transmitting unit is specifically configured to send a first data packet that is encapsulated by using the second protocol stack and corresponds to one user equipment to the application server by using the one data transmission bearer and the TCP connection established by the connection control unit, where the first data packet encapsulated by using the second protocol stack includes an IP address and a TCP port number that is generated by the proxy device, the TCP port number and the IP address are used by the application server to distinguish the data packet corresponding to the user equipment, and the multiple data transmission bearers are distinguished by using a GTP port number generated by the proxy device or by using a dedicated bearer number.

Still another aspect of the present invention provides user equipment, including:
a bearer control unit, configured to establish a bearer between the user equipment and a packet data gateway P-GW; and
a sending unit, configured to send a first data packet encapsulated by using a first protocol stack to a proxy device by using the bearer established by the bearer control unit, so that the proxy device transforms the first data packet into a first data packet encapsulated by using a second protocol stack, and sends the first data packet encapsulated by using the second protocol stack to an application server, where the second protocol stack includes the Transmission Control Protocol TCP protocol, and the first protocol stack does not include the TCP protocol.

According to the foregoing aspect and any possible implementation manner, an implementation manner is further provided, where the user equipment further includes:
a receiving unit, configured to receive a second data packet encapsulated by using the fourth protocol stack and sent by the proxy device, where the second data packet encapsulated by using the fourth protocol stack is obtained by the proxy device after the proxy device transforms a received second data packet encapsulated by using a third protocol stack, where the third protocol stack includes the Transmission Control Protocol TCP protocol, and the fourth protocol stack does not include the TCP protocol.

Still another aspect of the present invention provides a proxy device, including:
a receiver, configured to receive a first data packet encapsulated by using a first protocol stack;
a processor, configured to transform the first data packet received by the receiver into a first data packet encapsulated by using a second protocol stack;
a transmitter, configured to send the first data packet encapsulated by using the second protocol stack by the processor to an application server; and
a bus, connected to the receiver, the processor, and the transmitter, where the receiver, the processor, and the transmitter perform data interaction by using the bus, where the second protocol stack includes the Transmission Control Protocol TCP protocol, and the first protocol stack does not include the TCP protocol.

According to the foregoing aspect and any possible implementation manner, an implementation manner is further provided, where
the processor is further configured to establish a TCP connection between the proxy device and the application server.

According to the foregoing aspect and any possible implementation manner, an implementation manner is further provided, where
the first data packet encapsulated by using the first protocol stack and received by the receiver is sent after one or more data bearers are established between user equipment and a gateway.

According to the foregoing aspect and any possible implementation manner, an implementation manner is further provided, where the transmitter is specifically configured to send the first data packet encapsulated by using the second protocol stack to the application server by using the TCP connection and the one or more data bearers.

According to the foregoing aspect and any possible implementation manner, an implementation manner is further provided, where
the receiver is further configured to receive a second data packet encapsulated by using a third protocol stack;
the processor is further configured to transform the second data packet into a second data packet encapsulated by using a fourth protocol stack; and
the transmitter is further configured to send the second data packet encapsulated by using the fourth protocol stack to the user equipment, where the third protocol stack includes the Transmission Control Protocol TCP protocol, and the fourth protocol stack does not include the TCP protocol.

According to the foregoing aspect and any possible implementation manner, an implementation manner is further provided, where the processor is further configured to release the TCP connection between the proxy device and the application server.

According to the foregoing aspect and any possible implementation manner, an implementation manner is further provided, where
the transmitter is specifically configured to send first data packets that are encapsulated by using the second protocol stack and correspond to multiple user equipments to the application server by using the one data transmission bearer and the TCP connection, where the first data packets encapsulated by using the second protocol stack each include an Internet Protocol IP address and a TCP port number that is generated by the proxy device, and the TCP port number and the IP address are used by the application server to distinguish the data packets corresponding to the user equipments; or
the transmitter is specifically configured to send a first data packet that is encapsulated by using the second protocol stack and corresponds to one user equipment to the application server by using the one data transmission bearer and the TCP connection, where the first data packet encapsulated by using the second protocol stack includes an IP address and a TCP port number that is generated by the proxy device, the TCP port number and the IP address are used by the application server to distinguish the data packet corresponding to the user equipment, and the multiple data transmission bearers are distinguished by using a GTP port number generated by the proxy device or by using a dedicated bearer number.

Still another aspect of the present invention provides user equipment, including:
a processor, configured to establish a bearer between the user equipment and a packet data gateway P-GW;
a transmitter, configured to send a first data packet encapsulated by using a first protocol stack to a proxy device by using the bearer established by processor, so that the proxy device transforms the first data packet into a first data packet encapsulated by using a second protocol stack, and sends the first data packet encapsulated by using the second protocol stack to an application server, where the second protocol stack includes the Transmission Control Protocol TCP protocol, and the first protocol stack does not include the TCP protocol; and
a bus, connected to the processor and the transmitter, where the processor performs data interaction with the transmitter by using the bus.

According to the foregoing aspect and any possible implementation manner, an implementation manner is further provided, where the user equipment further includes:
a receiver, configured to receive a second data packet encapsulated by using the fourth protocol stack and sent by the proxy device, where the second data packet encapsulated by using the fourth protocol stack is obtained by the proxy device after the proxy device transforms a received second data packet encapsulated by using a third protocol stack, where the third protocol stack includes the Transmission Control Protocol TCP protocol, and the fourth protocol stack does not include the TCP protocol.

It can be seen from the foregoing invention content that, a proxy device receives a first data packet encapsulated by using a first protocol stack, transforms the first data packet into a first data packet encapsulated by using a second protocol stack, and sends the first data packet encapsulated by using the second protocol stack to an application server, where the second protocol stack includes the Transmission Control Protocol TCP protocol, and the first protocol stack does not include the TCP protocol, so that communication can be performed between user equipment and the application server by using the proxy device. In this way, signaling interactions between the user equipment and a communications network are reduced, and for an M2M network with a large quantity of user equipments, a large quantity of network resources can be saved for the communications network. Moreover, protocol stack transformation is performed between different protocol stacks by using the proxy device, thereby implementing communication between devices whose protocol stacks are not equivalent, for example, implementing communication between the user equipment and the application server, whose protocol stacks are not equivalent.

Further, when a protocol stack of user equipment does not include the TCP protocol layer, while a protocol stack of an application server includes the TCP layer, a problem that the user equipment cannot communicate with the application server because of nonequivalent protocol stacks is caused. To solve this problem, it is set that a protocol stack of a proxy device includes the TCP protocol layer, so that the proxy device can perform protocol stack transformation between different protocol stacks, thereby implementing communication between devices whose protocol stacks are not equivalent.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of a data transmission method according to an embodiment of the present invention;
FIG. 2 is a flowchart of a data transmission method according to another embodiment of the present invention;
FIG. 3 is a flowchart of a data transmission method according to another embodiment of the present invention;
FIG. 4 is a schematic architectural diagram of a data transmission protocol stack according to still another embodiment of the present invention;
FIG. 5 is a schematic architectural diagram of another data transmission protocol stack according to still another embodiment of the present invention;
FIG. 6 is a schematic architectural diagram of still another data transmission protocol stack according to still another embodiment of the present invention;
FIG. 7 is a schematic architectural diagram of a data transmission protocol stack according to yet another embodiment of the present invention;
FIG. 8 is a schematic architectural diagram of another data transmission protocol stack according to yet another embodiment of the present invention;
FIG. 9 is a schematic architectural diagram of still another data transmission protocol stack according to yet another embodiment of the present invention;
FIG. 10 is a schematic structural diagram of user equipment according to an embodiment of the present invention;
FIG. 11 is a schematic structural diagram of a proxy device according to an embodiment of the present invention;
FIG. 12 is a schematic structural diagram of user equipment according to another embodiment of the present invention;
FIG. 13 is a schematic structural diagram of a proxy device according to another embodiment of the present invention; and
FIG. 14 is a schematic architectural diagram of a protocol stack of an existing LTE network.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

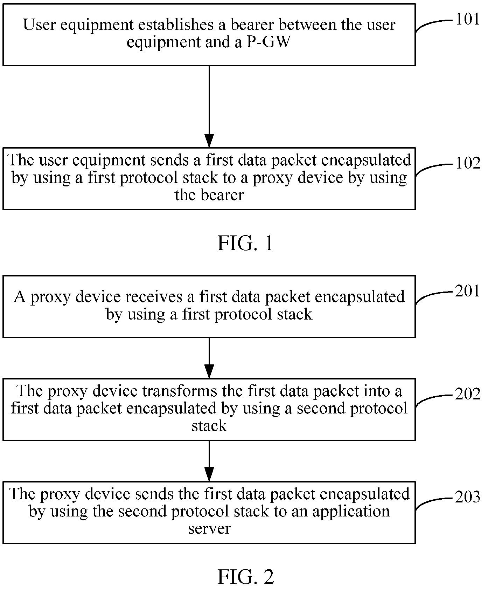

FIG. 1 is a flowchart of a data transmission method according to an embodiment of the present invention. As shown in FIG. 1, the method includes the following process:
Step 101: User equipment establishes a bearer between the user equipment and a packet data gateway (P-GW for short).
   In this step, the establishing of the bearer between the user equipment and the P-GW may be initiated by a network side.
Step 102: The user equipment sends a first data packet encapsulated by using a first protocol stack to a proxy device by using the bearer.
   In this step, the user equipment sends a first data packet encapsulated by using a first protocol stack to a proxy device by using the bearer, so that the proxy device transforms the first data packet into a first data packet encapsulated by using a second protocol stack, and sends the first data packet encapsulated by using the second protocol stack to an application server. The second protocol stack includes a Transmission Control Protocol (Transmission Control Protocol, TCP protocol for short), and the first protocol stack does not include the TCP protocol.

In this embodiment of the present invention, user equipment establishes a bearer between the user equipment and a P-GW, and sends a first data packet encapsulated by using a first protocol stack to a proxy device by using the bearer, so that the proxy device transforms the first data packet into a first data packet encapsulated by using a second protocol stack, and sends the first data packet encapsulated by using the second protocol stack to an application server, where the second protocol stack includes the TCP protocol, and the first protocol stack does not include the TCP protocol, so that communication can be performed between the user equipment and the application server by using the proxy device. In this way, signaling interactions between the user equipment and a communications network are reduced, and for an M2M network with a large quantity of user equipments, a large quantity of network resources can be saved for the communications network. Moreover, protocol stack transformation is performed between different protocol stacks by using the proxy device, thereby implementing communication between devices whose protocol stacks are not equivalent, for example, implementing communication between the user equipment and the application server, whose protocol stacks are not equivalent.

Further, when a protocol stack of user equipment does not include the TCP protocol layer, while a protocol stack of an application server includes the TCP layer, a problem that the user equipment cannot communicate with the application server because of nonequivalent protocol stacks is caused. To solve this problem, it is set that a protocol stack of a proxy device includes the TCP protocol layer, so that the proxy device can perform protocol stack transformation between different protocol stacks, thereby implementing communication between devices whose protocol stacks are not equivalent.

On the basis of the foregoing technical solution of this embodiment of the present invention, the method further includes: receiving, by the user equipment, a second data packet encapsulated by using the fourth protocol stack and sent by the proxy device, where the second data packet encapsulated by using the fourth protocol stack is obtained by the proxy device after the proxy device transforms a received second data packet encapsulated by using a third protocol stack, where the third protocol stack includes the TCP protocol, and the fourth protocol stack does not include the TCP protocol.

FIG. 2 is a flowchart of a data transmission method according to another embodiment of the present invention. As shown in FIG. 2, the method includes the following process:
Step 201: A proxy device receives a first data packet encapsulated by using a first protocol stack.
Step 202: The proxy device transforms the first data packet into a first data packet encapsulated by using a second protocol stack.
Step 203: The proxy device sends the first data packet encapsulated by using the second protocol stack to an application server.

In this step, the proxy device sends the first data packet encapsulated by using the second protocol stack to an application server, where the second protocol stack includes the TCP protocol, and the first protocol stack does not include the TCP protocol.

In this embodiment of the present invention, a proxy device receives a first data packet encapsulated by using a first protocol stack, transforms the first data packet into a first data packet encapsulated by using a second protocol stack, and sends the first data packet encapsulated by using the second protocol stack to an application server, where the second protocol stack includes the TCP protocol, and the first protocol stack does not include the TCP protocol, so that communication can be performed between user equipment and the application server by using the proxy device. In this way, signaling interactions between the user equipment and a communications network are reduced, and for an M2M network with a large quantity of user equipments, a large quantity of network resources can be saved for the communications network. Moreover, protocol stack transformation is performed between different protocol stacks by using the proxy device, thereby implementing communication between devices whose protocol stacks are not equivalent, for example, implementing communication between the user equipment and the application server, whose protocol stacks are not equivalent.

Further, when a protocol stack of user equipment does not include the TCP protocol layer, while a protocol stack of an application server includes the TCP layer, a problem that the user equipment cannot communicate with the application server because of nonequivalent protocol stacks is caused. To solve this problem, it is set that a protocol stack of a proxy device includes the TCP protocol layer, so that the proxy device can perform protocol stack transformation between different protocol stacks, thereby implementing communication between devices whose protocol stacks are not equivalent.

On the basis of the foregoing technical solution of this embodiment of the present invention, the method further includes: establishing, by the proxy device, a TCP connection between the proxy device and the application server.

On the basis of the foregoing technical solution of this embodiment of the present invention, further, the first data packet encapsulated by using the first protocol stack and received by the proxy device is sent after one or more data bearers are established between the user equipment and a gateway. In this step, the establishing of the bearer between the user equipment and the gateway may be initiated by a network side.

On the basis of the foregoing technical solution of this embodiment of the present invention, further, the sending, by the proxy device, the first data packet encapsulated by using the second protocol stack to an application server includes: sending, by the proxy device, the first data packet encapsulated by using the second protocol stack to the application server by using the TCP connection and the one or more data bearers.

On the basis of the foregoing technical solution of this embodiment of the present invention, further, after the sending, by the proxy device, the first data packet encapsulated by using the second protocol stack to the application server by using the TCP connection and the one or more data bearers, the method further includes: receiving, by the proxy device, a second data packet encapsulated by using a third protocol stack; transforming, by the proxy device, the second data packet into a second data packet encapsulated by using a fourth protocol stack; and sending, by the proxy device, the second data packet encapsulated by using the fourth protocol stack to the user equipment, where the third protocol stack includes the Transmission Control Protocol TCP protocol, and the fourth protocol stack does not include the TCP protocol.

On the basis of the foregoing technical solution of this embodiment of the present invention, further, after the sending, by the proxy device, the first data packet encapsulated by using the second protocol stack to the application server by using the TCP connection and the one or more data bearers, the method further includes: releasing, by the proxy device, the TCP connection between the proxy device and the application server.

On the basis of the foregoing technical solution of this embodiment of the present invention, further, the sending, by the proxy device, the first data packet encapsulated by using the second protocol stack to the application server by using the TCP connection and the one or more data bearers includes: sending, by the proxy device, first data packets that are encapsulated by using the second protocol stack and correspond to multiple user equipments to the application server by using the one data transmission bearer and the TCP connection, where the first data packets encapsulated by using the second protocol stack each include an Internet Protocol IP address and a TCP port number that is generated by the proxy device, and the TCP port number and the IP address are used by the application server to distinguish the data packets corresponding to the user equipments; or sending, by the proxy device, a first data packet that is encapsulated by using the second protocol stack and corresponds to one user equipment to the application server by using the one data transmission bearer and the TCP connection, where the first data packet encapsulated by using the second protocol stack includes an IP address and a TCP port number that is generated by the proxy device, the TCP port number and the IP address are used by the application server to distinguish the data packet corresponding to the user equipment, and the multiple data transmission bearers are distinguished by using a GTP port number generated by the proxy device or by using a dedicated bearer number.

In another embodiment of the present invention, a data transmission method may include the following process:
Step 1: An application server receives a protocol stack establishment request sent by a proxy device.
Step 2: If determining that the protocol stack establishment request is an initial User Datagram Protocol/Internet Protocol (UDP/IP for short) request, the application server establishes a protocol stack including at least an application layer (APP layer for short), a User Datagram Protocol layer (UDP layer for short), an Internet Protocol layer (IP layer for short), a link layer, and a physical layer; or if determining that the protocol stack establishment request is a Transmission Control Protocol/Internet Protocol (TCP/IP for short) connection request, the application server establishes a protocol stack including at least an APP layer, a UDP layer, an IP layer, a TCP layer, and an IP layer.

On the basis of the foregoing technical solution, further, the TCP/IP connection request received by the application server is sent after the proxy device encapsulates a UDP/IP request sent by UE into the TCP/IP.

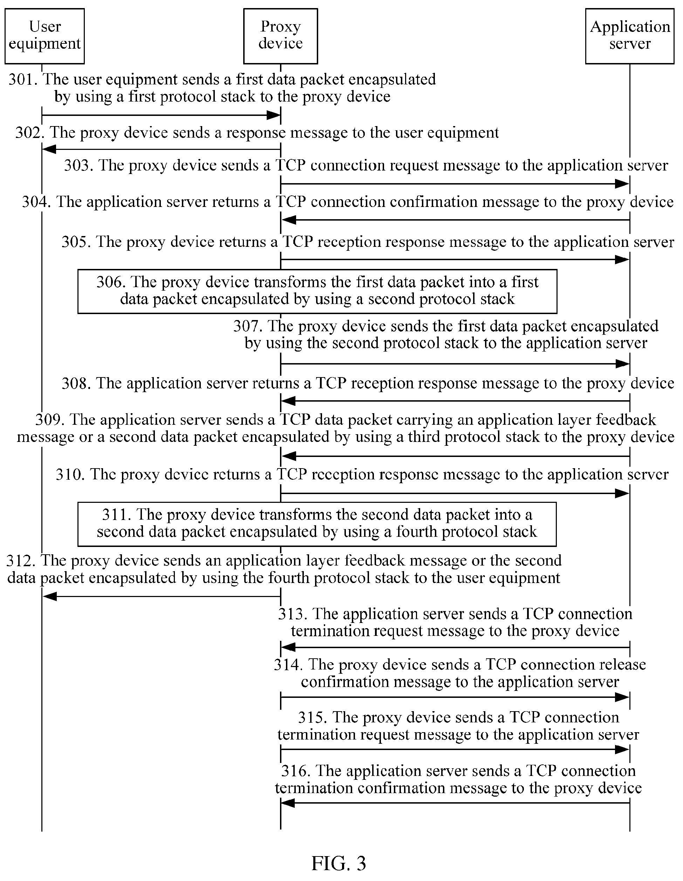

FIG. 3 is a flowchart of a data transmission method according to another embodiment of the present invention.

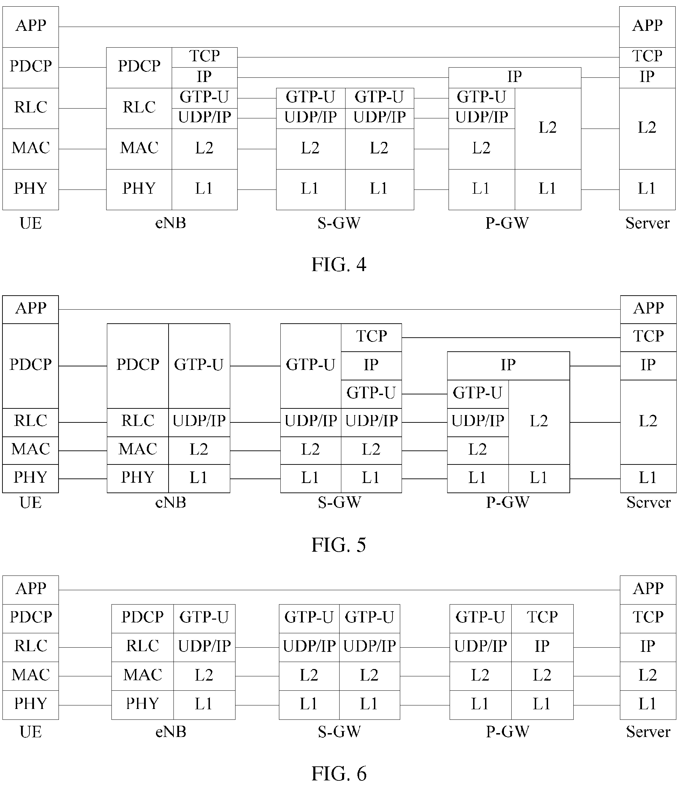

The technical solution of this embodiment of the present invention is an improvement on a data transmission protocol stack architecture in an M2M network. FIG. 4 is a schematic architectural diagram of a data transmission protocol stack according to still another embodiment of the present invention. FIG. 5 is a schematic architectural diagram of another data transmission protocol stack according to still another embodiment of the present invention. FIG. 6 is a schematic architectural diagram of still another data transmission protocol stack according to still another embodiment of the present invention. The data transmission protocol stack architecture in this embodiment of the present invention is described by using only the examples based an LTE network, and the network architecture may also be applied to other various wireless communications networks, which is not limited in the present invention.

As shown in FIG. 4 to FIG. 6, specifically, in the data transmission protocol stack, a protocol stack of user equipment includes an application layer (APP shown in the figures), a data link layer, and a physical layer (PHY shown in the figures), where the data link layer includes a Packet Data Convergence Protocol layer (PDCP shown in the figures), a radio link control layer (RLC shown in the figures), and a Media Access Control layer (MAC shown in the figures). Compared a data transmission protocol stack in an existing LTE network, a data transmission protocol stack of user equipment in this embodiment of the present invention does not include a network layer such as a TCP layer, a UDP layer, or an IP layer.

As shown in FIG. 4 to FIG. 6, specifically, a data transmission protocol stack of an application server shown in the figures is the same as a data transmission protocol stack of an application server in an existing LTE network, and includes, from top to bottom, an application layer (APP shown in the figures), a network layer, a Media Access Control layer (L2 shown in the figures), and a physical layer (L1 shown in the figures).

It can be known from the foregoing analysis that, in FIG. 4 to FIG. 6, because the data transmission protocol stacks of the user equipment and the application server are asymmetric, the user equipment cannot directly communicate with the application server. Data may be transmitted between the user equipment and the application server via a communications network such as LTE, UMTS, or WiFi.

To solve the foregoing mentioned problem, an LTE network is used as an example for description, but the present invention is not limited thereto. An LTE network element provides TCP/IP proxy for the user equipment, and an LTE network element providing TCP/IP proxy for the user equipment is referred to as a proxy device. When a data packet of the user equipment reaches the LTE network, the proxy device establishes a TCP/IP connection between the proxy device and the application server, to provide reliable transmission between the communications network and the application server. For example, in FIG. 4, a base station (eNB for short) is used as a proxy device. For example, in FIG. 5, a serving gateway (S-GW for short) is used as a proxy device. For example, in FIG. 6, a packet data gateway (P-GW for short) is used as a proxy device. In FIG. 4 to FIG. 6, a protocol stack corresponding to the user equipment (UE shown in the figures) is used as an example of the first protocol stack and the third protocol stack, and a protocol stack corresponding to the application server (Server shown in the figures) is used as an example of the second protocol stack and the fourth protocol stack.

As described above, application layer data transmission can be performed between the user equipment and the application server via the proxy device. A specific process is as follows: the user equipment sends a first data packet to the application server, and after receiving the first data packet, the application server returns a reply message to the user equipment. Correspondingly, the application server may also send a service data packet to the user equipment, where the service data packet belongs to an application layer, and after receiving the service data packet, the user equipment returns a reply message to the application server. A specific case is as follows:

FIG. 3 is a flowchart of a data transmission method according to another embodiment of the present invention. FIG. 3 shows a process where a first data packet is transmitted to a peer end by using a TCP bearer in a case in which a proxy device exists in a network. As shown in FIG. 3, the method includes the following process. In the process shown in FIG. 3, the proxy device may be an eNB, an S-GW, or a P-GW.

301: User equipment sends a first data packet encapsulated by using a first protocol stack to a proxy device.

In this step, user equipment sends a first data packet encapsulated by using a first protocol stack to a proxy device, where the first protocol stack does not include the TCP protocol layer.

It should be particularly noted that, before step 301 is performed, a network side already establishes one or more data bearers between the user equipment and a gateway, and the user equipment communicates with the proxy device by using the one or more data bearers.

302: The proxy device sends a response message to the user equipment.

In this step, the proxy device sends a response message to the user equipment; if the proxy device successfully receives the first data packet encapsulated by using the first protocol stack and sent by the user equipment, the proxy device returns an acknowledgement response message (ACK for short) to the user equipment; if the proxy device fails to receive the first data packet encapsulated by using the first protocol stack and sent by the user equipment, the proxy device returns a negative acknowledgement response message (NACK for short) to the user equipment. The response message may be a response message of a radio link layer, such as an automatic repeat request (Automatic Repeat request, ARQ for short) reply of an RLC layer or a hybrid automatic repeat request (Hybrid Automatic Repeat Request, HARQ for short) feedback reply of a MAC layer.

After step 301, the proxy device establishes a TCP connection between the proxy device and an application server, which specifically includes the following step 303 to step 305.

303: The proxy device sends a TCP connection request message to an application server.

304: The application server returns a TCP connection ACK message to the proxy device.

305: The proxy device returns a TCP reception response message to the application server.

After the TCP connection is established, the proxy device sends, to the application server, data that needs to be sent by the user equipment, and receives a reply from the application server. Specifically, step 306 to step 308 are performed.

306: The proxy device transforms the first data packet into a first data packet encapsulated by using a second protocol stack.

In this step, the proxy device transforms the first data packet into a first data packet encapsulated by using a second protocol stack, where the second protocol stack includes the TCP protocol layer.

307: The proxy device sends the first data packet encapsulated by using the second protocol stack to the application server.

It should be particularly noted that, the proxy device sends first data packets that are encapsulated by using the second protocol stack and correspond to multiple user equipments to the application server by using the one data transmission bearer and the TCP connection, where the first data packets encapsulated by using the second protocol stack each include an Internet Protocol IP address and a TCP port number that is generated by the proxy device, and the TCP port number and the IP address are used by the application server to distinguish the data packets corresponding to the user equipments; or the proxy device sends a first data packet that is encapsulated by using the second protocol stack and corresponds to one user equipment to the application server by using the one data transmission bearer and the TCP connection, where the first data packet encapsulated by using the second protocol stack includes an IP address and a TCP port number that is generated by the proxy device, the TCP port number and the IP address are used by the application server to distinguish the data packet corresponding to the user equipment, and the multiple data transmission bearers are distinguished by using a general packet radio service tunneling protocol GTP port number generated by the proxy device or by using a dedicated bearer number.

308: The application server returns a TCP reception response message to the proxy device.

After step 308, if the application server also has data that needs to be sent to the user equipment, the proxy device receives data from the application server and returns a reply. Specifically, step 309 and step to step 311 are performed.

309: The application server sends a TCP data packet carrying an application layer feedback message or a second data packet encapsulated by using a third protocol stack to the proxy device.

In this step, the application server sends a TCP data packet carrying an application layer feedback message or a second data packet encapsulated by using a third protocol stack to the proxy device, where the third protocol stack includes the TCP protocol layer.

310: The proxy device returns a TCP reception response message to the application server.

311: The proxy device transforms the second data packet into a second data packet encapsulated by using a fourth protocol stack.

In this step, the proxy device transforms the second data packet into a second data packet encapsulated by using a fourth protocol stack, where the fourth protocol stack does not include the TCP protocol layer.

312: The proxy device sends an application layer feedback message or the second data packet encapsulated by using the fourth protocol stack to the user equipment.

After step 308, the proxy device may release the TCP connection between the proxy device and the application server, which specifically includes the following step 313 to step 316.

Step 313: The application server sends a TCP connection termination request message to the proxy device.

Step 314: The proxy device sends a TCP connection termination confirmation message to the application server.

Step 315: The proxy device sends a TCP connection termination request message to the application server.

Step 316: The application server sends a TCP connection termination confirmation message to the proxy device.

In this embodiment of the present invention, a proxy device receives, from user equipment, a first data packet encapsulated by using a first protocol stack, and the proxy device establishes a TCP connection to an application server, and sends a first data packet encapsulated by using a second protocol stack to the application server. In this way, signaling interactions between the user equipment and a communications network are reduced. With the use of the foregoing technical solution of this embodiment of the present invention, an interaction between the user equipment and the communications network is simplified, and a complex multi-step interaction is transferred to be performed between the communications network and the application server. In an M2M network, a quantity of user equipments is far greater than a quantity of application servers, and a ratio of the quantity of user equipments to the quantity of application servers may reach 1:100000 or even higher; therefore, reducing signaling interactions between the user equipment and the communications network can save a large quantity of network resources for the communications network. Moreover, protocol stack transformation is performed between different protocol stacks by using the proxy device, thereby implementing communication between devices whose protocol stacks are not equivalent, for example, implementing communication between the user equipment and the application server, whose protocol stacks are not equivalent.

Further, when a protocol stack of user equipment does not include the TCP protocol layer, while a protocol stack of an application server includes the TCP layer, a problem that the user equipment cannot communicate with the application server because of nonequivalent protocol stacks is caused. To solve this problem, it is set that a protocol stack of a proxy device includes the TCP protocol layer, so that the proxy device can perform protocol stack transformation between different protocol stacks, thereby implementing communication between devices whose protocol stacks are not equivalent.

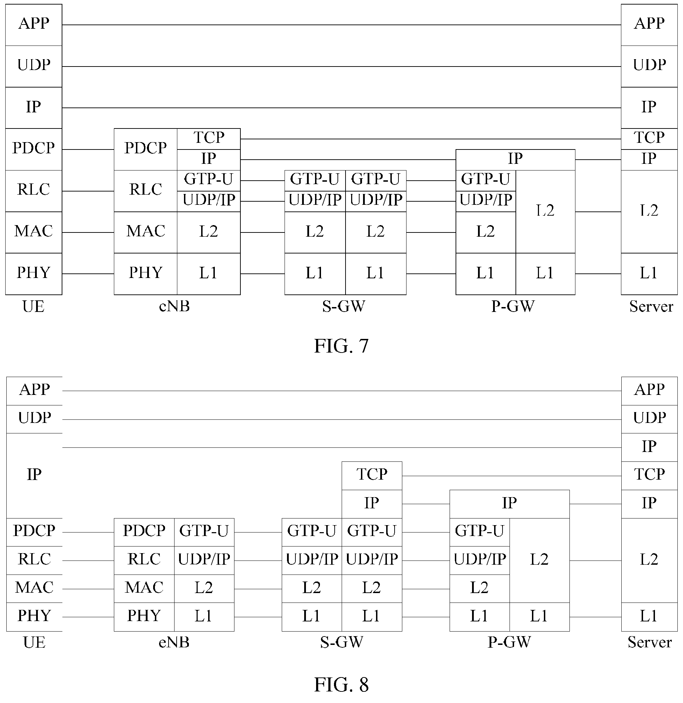

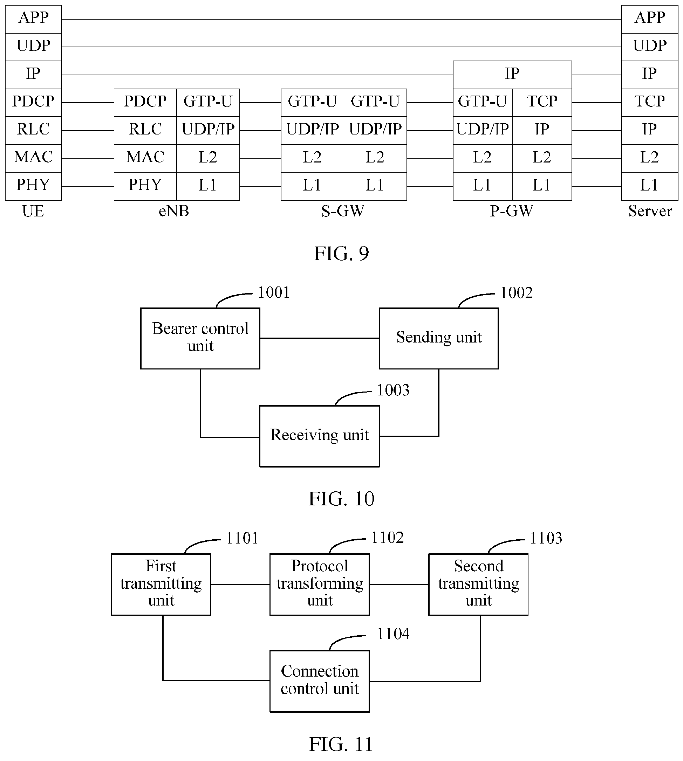

FIG. 7 is a schematic architectural diagram of a data transmission protocol stack according to yet another embodiment of the present invention. FIG. 8 is a schematic architectural diagram of another data transmission protocol stack according to yet another embodiment of the present invention. FIG. 9 is a schematic architectural diagram of still another data transmission protocol stack according to yet another embodiment of the present invention. The architectures of the data transmission protocol stacks shown in FIG. 7 to FIG. 9 are based on an LTE network. The data transmission protocol stack architecture in this embodiment of the present invention is described by using only the examples based on the LTE network, and the network architecture may also be applied to other various wireless communications networks. In both the data transmission protocol stack architecture in this embodiment of the present invention shown in FIG. 7 to FIG. 9 and the data transmission protocol stack architecture in the embodiment of the present invention shown in FIG. 4 to FIG. 6, a proxy device is configured in a communications network, and the difference lies in that, in the data transmission protocol stack architecture in this embodiment of the present invention shown in FIG. 7 to FIG. 9, both user equipment and an application server include a transmission layer (UDP layer) and a network layer (IP layer).

Specifically, as shown in FIG. 7 to FIG. 9, in this embodiment of the present invention, the user equipment has a transmission layer and a network layer, where a UDP protocol is used at the transmission layer. The UDP provides unreliable data transmission; therefore, in this embodiment of the present invention, TCP/IP proxy is provided for the user equipment in the communications network, thereby providing a guarantee of reliable transmission between the communications network and the application server.

In this embodiment of the present invention, only an LTE network is used as an example of the communications network. In the LTE network, an LTE network element provides TCP/IP proxy for the user equipment, and an LTE network element providing TCP/IP proxy for the user equipment is referred to as a proxy device. When a data packet of the user equipment reaches the LTE network, the proxy device establishes a TCP/IP connection between the proxy device and the application server, to provide reliable transmission between the communications network and the application server.

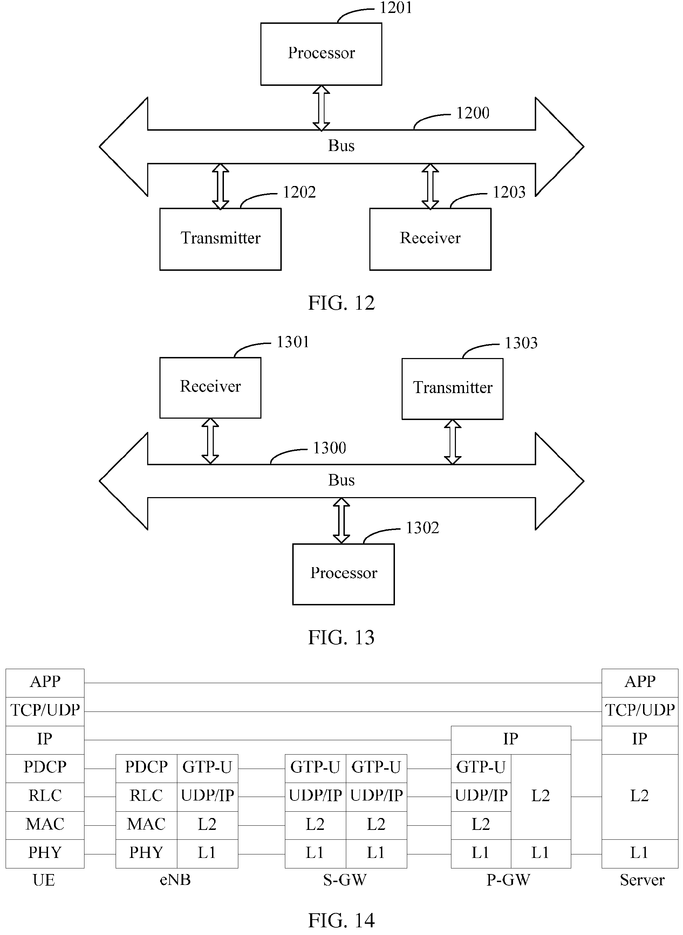

This embodiment provides a method for generating a flexible protocol stack, and compared with a fixed protocol stack, a generated flexible protocol stack allows a server to establish different communication peer layers. As shown in FIG. 7, when a proxy network element exists in a network, a server end establishes UDP, IP, TCP, and IP layers for this connection, where the UDP, IP, TCP, and IP layers are represented by a UDP/IP layer in the standard communications protocol, that is, performs communication by using a bottom-layer TCP/IP proxy. FIG. 14 is a schematic architectural diagram of a protocol stack in an existing LTE network, and when no proxy network element exists in the network, the server establishes only a UDP layer and an IP layer for this connection. The server is allowed to establish different types of communication protocol stacks, that is, generate a flexible protocol stack described in this embodiment, which is summarized as follows: the server receives different transmission layer requests; when receiving a TCP request, the server establishes a stack including UDP, IP, TCP, and IP protocols for this connection, where the stack including the UDP, IP, TCP, and IP protocols is represented by a UDP/IP protocol stack in the standard communications protocol; and when receiving a UDP request, the server establishes a stack including UDP and IP protocols for the UE.

Layers of different protocol stacks established by the server after the server receives different user requests are as follows: if the server receives a UDP request, it can be known that no proxy exists in the network, and therefore, the server establishes a UDP/IP protocol stack, where layers of the protocol stack are, from top to bottom, an L1 layer, an L2 layer, an IP layer, a UDP layer, and an APP layer; if the server receives a TCP request, it can be known that a proxy exists in a transmission network, and a complex stack including UDP, IP, TCP, and IP protocols needs to be established, where layers of the protocol stack are, from top to bottom, an L1 layer, an L2 layer, an IP layer, a TCP layer, an IP layer, a UDP layer, and an APP layer. This process is equivalent that the server detects a condition of the transmission network, to determine whether a proxy network element exists in the transmission network.

Referring to FIG. 7 to FIG. 9, which show an improvement on the protocol stack of the application server in the embodiment of the present invention shown in FIG. 4 to FIG. 6, and the improved protocol stack of the application server includes, from top to bottom, an application layer (APP shown in the figures), a UDP layer, an IP layer, a TCP layer, an IP layer, a Media Access Control layer (L2 shown in the figures), and a physical layer (L1 shown in the figures). The application server has a capability of generating a flexible protocol stack. Generally, the application server provides only UDP/IP transmission including UDP and IP layers for the user equipment; after detecting a TCP/IP request, the application server simultaneously establishes, for an application, a UDP/IP layer including UDP and IP layers and a TCP/IP layer including UDP, IP, TCP, and IP layers; and when detecting an ordinary UDP request, the application server establishes only a UDP/IP layer for the user equipment. In this embodiment of the present invention shown in FIG. 7 to FIG. 9, a specific method for performing data transmission between the user equipment and the application server by using a proxy device is the same as the data transmission method in the embodiment of the present invention shown in FIG. 3, which is not described again herein.

In FIG. 7 to FIG. 9, a protocol stack corresponding to the user equipment (UE shown in the figures) is used as an example of the first protocol stack and the third protocol stack, and a protocol stack corresponding to the application server (Server shown in the figures) is used as an example of the second protocol stack and the fourth protocol stack.

In this embodiment of the present invention shown in FIG. 7 to FIG. 9, on the basis of the technical solution of the embodiment of the present invention shown in FIG. 4 to FIG. 6, UDP transmission from the user equipment to the application server is added, and because in the UDP protocol, no connection needs to be established, and no confirmation needs to be sent in reply, transmission complexity is not increased. In this embodiment of the present invention shown in FIG. 7 to FIG. 9, a specific method for performing data transmission between the user equipment and the application server by using the proxy device is the same as the data transmission method of the embodiment of the present invention shown in FIG. 3, and the method can reduce signaling interactions between the user equipment and the communications network, simplify an interaction between the user equipment and the communications network, and transfer a complex multi-step interaction to be performed between the communications network and the application server. In an M2M network, a quantity of user equipments is far greater than a quantity of application servers, and a ratio of the quantity of user equipment to the quantity of application servers may reach 1:100000 or even higher. Therefore, reducing signaling interactions between the user equipment and the communications network can save a large quantity of network resources for the communications network. Moreover, complex implementation is transferred to the application server, and because a quantity of user equipments is large, simplifying the design of the user equipment is of great benefit to cost control, power saving, or the like. Moreover, protocol stack transformation is performed between different protocol stacks by using the proxy device, thereby implementing communication between devices whose protocol stacks are not equivalent, for example, implementing communication between the user equipment and the application server, whose protocol stacks are not equivalent.

Further, when a protocol stack of user equipment does not include the TCP protocol layer, while a protocol stack of an application server includes the TCP layer, a problem that the user equipment cannot communicate with the application server because of nonequivalent protocol stacks is caused. To solve this problem, it is set that a protocol stack of a proxy device includes the TCP protocol layer, so that the proxy device can perform protocol stack transformation between different protocol stacks, thereby implementing communication between devices whose protocol stacks are not equivalent.

On the basis of the technical solutions of the foregoing embodiments of the present invention, the proxy device may further establish one data transmission bearer for more than one user equipment, that is, establishes a unified bearer, and transmits data packets between the user equipments and the application server by using the unified bearer and the TCP connection. A specific method for sending, by the proxy device, the first data packet encapsulated by using the second protocol stack to the application server by using the one data transmission bearer and the TCP connection is: sending, by the proxy device, first data packets that are encapsulated by using the second protocol stack and correspond to more than one user equipment to the application server by using the unified bearer, where a TCP port number, an IP address, and a GTP port number are used to distinguish a TCP data packet corresponding to each of the user equipments. A specific method for sending, by the proxy device, the application layer feedback message or the second data packet encapsulated by using the third protocol stack to the user equipment is: sending, by the proxy device, application layer feedback messages or second data packets encapsulated by using the third protocol stack to the user equipments by using the unified bearer, where a TCP port number, an IP address, and a GTP port number are used to distinguish an application layer feedback message or a second data packet, which is encapsulated by using the third protocol stack, that corresponds to each of the user equipments. The first data packets encapsulated by using the second protocol stack each include an IP address and a TCP port number that is generated by the proxy device, the TCP port number and the IP address are used by the application server to distinguish the data packets corresponding to the user equipment, and the multiple data transmission bearers are distinguished by using a GTP port number generated by the proxy device or by using a dedicated bearer number.

Specifically, referring to FIG. 4, an eNB is used as an example of the proxy device. An IP-layer data packet transmitted between the eNB and a P-GW is borne by using a GTP protocol. According to a transmission method in the prior art, one individual bearer is established between each user equipment and the P-GW. In an M2M network, a large quantity of user equipments communicate with a same application server, and service data packets of the user equipments have a same quality of service (QoS for short) requirement. For example, in a smart meter network, a large quantity of home meters communicate with an application server, and report meter measurement values. In the foregoing embodiments of the present invention, user equipments communicating with a same application server are grouped into one group, a unified bearer is established for the group of user equipments between the eNB and the P-GW, and all data packets of services of the same type are transmitted on the unified bearer. Data packets corresponding to a group of user equipments are transmitted by using the unified bearer, and different unified bearers are distinguished by using GTP port numbers. Inside a unified bearer, data packets corresponding to different user equipments are distinguished by using TCP port numbers and IP addresses. Using a process in which an eNB receives data from a P-GW as an example, that is, using a downlink process as an example, when multiple data packets arrive, the multiple data packets are transmitted on a unified bearer, and therefore have a unified GTP port number, and a GTP layer of the eNB delivers all received data packets that have the same GTP port number to an IP layer according to different IP addresses, thereby distinguishing the data packets corresponding to different user equipments by using the IP addresses, and the IP layer of the eNB delivers all received data packets that have a same IP address to the TCP layer according to different TCP port numbers, thereby distinguishing the data packets corresponding to different user equipments by using the TCP port numbers. In the foregoing process, data packets corresponding to different user equipments can be distinguished by using GTP port numbers, IP addresses, and TCP port numbers, that is, there is a one-to-one correspondence between a combination of GTP port numbers, IP addresses, and TCP port numbers and user equipments. An uplink process is similar to the foregoing downlink process, and is not described herein.

The foregoing technical solution of the unified bearer is described by using only an example in which an eNB is used as a proxy device, and when another network element device is used as a proxy device, the proxy device executes the foregoing operation by the eNB for the unified bearer. Performing data transmission between the user equipment and the application server by using the unified bearer further reduces signaling interactions between the communications network and the application server, and saves network resources for the communications network.

FIG. 10 is a schematic structural diagram of user equipment according to an embodiment of the present invention. As shown in FIG. 10, the user equipment includes at least a bearer control unit 1001 and a sending unit 1002. The bearer control unit 1001 is configured to establish a bearer between the user equipment and a packet data gateway P-GW.

The sending unit 1002 is configured to send a first data packet encapsulated by using a first protocol stack to a proxy device by using the bearer established by the bearer control unit 1001, so that the proxy device transforms the first data packet into a first data packet encapsulated by using a second protocol stack, and sends the first data packet encapsulated by using the second protocol stack to an application server, where the second protocol stack includes the Transmission Control Protocol TCP protocol, and the first protocol stack does not include the TCP protocol.

On the basis of the foregoing technical solution, further, the user equipment may further include: a receiving unit 1003. The receiving unit 1003 is configured to receive a second data packet encapsulated by using the fourth protocol stack and sent by the proxy device, where the second data packet encapsulated by using the fourth protocol stack is obtained by the proxy device after the proxy device transforms a received second data packet encapsulated by using a third protocol stack, where the third protocol stack includes the Transmission Control Protocol TCP protocol, and the fourth protocol stack does not include the TCP protocol.

The user equipment of this embodiment of the present invention may be configured to execute the data transmission method of the foregoing embodiments of the present invention, and for a specific implementation process and a technical effect thereof, reference may be made to the foregoing embodiments of the present invention, which are not described again herein.

FIG. 11 is a schematic structural diagram of a proxy device according to an embodiment of the present invention. As shown in FIG. 11, the proxy device includes at least: a first transmitting unit 1101, a protocol transforming unit 1102, and a second transmitting unit 1103.

The first transmitting unit 1101 is configured to receive a first data packet encapsulated by using a first protocol stack.

The protocol transforming unit 1102 is configured to transform the first data packet received by the first transmitting unit 1101 into a first data packet encapsulated by using a second protocol stack.

The second transmitting unit 1103 is configured to send the first data packet encapsulated by using the second protocol stack by the protocol transforming unit 1102 to an application server.

The second protocol stack includes the Transmission Control Protocol TCP protocol, and the first protocol stack does not include the TCP protocol.

On the basis of the foregoing technical solution, further, the proxy device further includes: a connection control unit 1104. The connection control unit 1104 is configured to establish a TCP connection between the proxy device and the application server.

On the basis of the foregoing technical solution, further, the first data packet encapsulated by using the first protocol stack and received by the first transmitting unit 1101 is sent after one or more data bearers are established between user equipment and a gateway.

On the basis of the foregoing technical solution, further, the second transmitting unit 1103 is specifically configured to send the first data packet encapsulated by using the second protocol stack to the application server by using the one or more data bearers and the TCP connection established by the connection control unit 1104.

On the basis of the foregoing technical solution, further, the second transmitting unit 1103 is further configured to receive a second data packet encapsulated by using a third protocol stack.

The protocol transforming unit 1102 is further configured to transform the second data packet received by the second transmitting unit 1103 into a second data packet encapsulated by using a fourth protocol stack.

The first transmitting unit 1101 is further configured to send the second data packet encapsulated by using the fourth protocol stack by the protocol transforming unit 1102 to the user equipment, where the third protocol stack includes the Transmission Control Protocol TCP protocol, and the fourth protocol stack does not include the TCP protocol.

On the basis of the foregoing technical solution, further, the connection control unit 1104 is further configured to release the TCP connection between the proxy device and the application server.

On the basis of the foregoing technical solution, further, the second transmitting unit 1103 is specifically configured send first data packets that are encapsulated by using the second protocol stack and correspond to multiple user equipments to the application server by using the one data transmission bearer and the TCP connection established by the connection control unit 1104, where the first data packets encapsulated by using the second protocol stack each include an Internet Protocol IP address and a TCP port number that is generated by the proxy device, and the TCP port number and the IP address are used by the application server to distinguish the data packets corresponding to the user equipments; or
the second transmitting unit 1103 is specifically configured to send a first data packet that is encapsulated by using the second protocol stack and corresponds to one user equipment to the application server by using the one data transmission bearer and the TCP connection established by the connection control unit 1104, where the first data packet encapsulated by using the second protocol stack includes an IP address and a TCP port number that is generated by the proxy device, the TCP port number and the IP address are used by the application server to distinguish the data packet corresponding to the user equipment, and the multiple data transmission bearers are distinguished by using a GTP port number generated by the proxy device or by using a dedicated bearer number.

The proxy device of this embodiment of the present invention may be configured to execute the data transmission method of the foregoing embodiments of the present invention, and for a specific implementation process and a technical effect thereof, reference may be made to Embodiment 1 of the present invention to Embodiment 4 of the present invention, which are not described again herein.

FIG. 12 is a schematic structural diagram of user equipment according to another embodiment of the present invention. As shown in FIG. 12, the user equipment includes at least: a processor 1201, a transmitter 1202, and a bus 1200.

The processor 1201 is configured to establish a bearer between the user equipment and a packet data gateway P-GW.

The transmitter 1202 is configured to send a first data packet encapsulated by using a first protocol stack to a proxy device by using the bearer established by processor 1201, so that the proxy device transforms the first data packet into a first data packet encapsulated by using a second protocol stack, and sends the first data packet encapsulated by using the second protocol stack to an application server, where the second protocol stack includes the Transmission Control Protocol TCP protocol, and the first protocol stack does not include the TCP protocol.

The bus 1200 is connected to the processor 1201 and the transmitter 1202, and the processor 1201 performs data interaction with the transmitter 1202 by using the bus 1200.

On the basis of the foregoing technical solution, further, the user equipment further includes: a receiver 1203. The receiver 1203 is configured to receive a second data packet encapsulated by using the fourth protocol stack and sent by the proxy device, where the second data packet encapsulated by using the fourth protocol stack is obtained by the proxy device after the proxy device transforms a received second data packet encapsulated by using a third protocol stack, where the third protocol stack includes the Transmission Control Protocol TCP protocol, and the fourth protocol stack does not include the TCP protocol.

The user equipment of this embodiment of the present invention may be configured to execute the data transmission method of the foregoing embodiments of the present invention, and for a specific implementation process and a technical effect thereof, reference may be made to the foregoing embodiments of the present invention, which are not described again herein.

FIG. 13 is a schematic structural diagram of a proxy device according to another embodiment of the present invention. As shown in FIG. 13, the proxy device includes at least: a receiver 1301, a processor 1302, a transmitter 1303, and a bus 1300.

The receiver 1301 is configured to receive a first data packet encapsulated by using a first protocol stack.

The processor 1302 is configured to transform the first data packet received by the receiver 1301 into a first data packet encapsulated by using a second protocol stack.

The transmitter 1303 is configured to send the first data packet encapsulated by using the second protocol stack by the processor 1302 to an application server.

The bus 1300 is connected to the receiver 1301, the processor 1302, and the transmitter 1303, where the receiver 1301, the processor 1302, and the transmitter 1303 perform data interaction by using the bus 1300, where the second protocol stack includes the Transmission Control Protocol TCP protocol, and the first protocol stack does not include the TCP protocol.

On the basis of the foregoing technical solution, further, the processor 1302 is further configured to establish a TCP connection between the proxy device and the application server.

On the basis of the foregoing technical solution, further, the first data packet encapsulated by using the first protocol stack and received by the receiver 1301 is sent after one or more data bearers are established between user equipment and a gateway.

On the basis of the foregoing technical solution, further, the transmitter 1303 is specifically configured to send the first data packet encapsulated by using the second protocol stack to the application server by using the TCP connection and the one or more data bearers.

On the basis of the foregoing technical solution, further, the receiver 1301 is further configured to receive a second data packet encapsulated by using a third protocol stack; the processor 1302 is further configured to transform the second data packet into a second data packet encapsulated by using a fourth protocol stack; and the transmitter 1303 is further configured to send the second data packet encapsulated by using the fourth protocol stack to the user equipment, where the third protocol stack includes the Transmission Control Protocol TCP protocol, and the fourth protocol stack does not include the TCP protocol.

On the basis of the foregoing technical solution, further, the processor 1302 is further configured to release the TCP connection between the proxy device and the application server.

On the basis of the foregoing technical solution, further, the transmitter 1303 is specifically configured to send first data packets that are encapsulated by using the second protocol stack and correspond to multiple user equipments to the application server by using the one data transmission bearer and the TCP connection, where the first data packets encapsulated by using the second protocol stack each include an Internet Protocol IP address and a TCP port number that is generated by the proxy device, and the TCP port number and the IP address are used by the application server to distinguish the data packets corresponding to the user equipments; or
the transmitter 1303 is specifically configured to send a first data packet that is encapsulated by using the second protocol stack and corresponds to one user equipment to the application server by using the one data transmission bearer and the TCP connection, where the first data packet encapsulated by using the second protocol stack includes an IP address and a TCP port number that is generated by the proxy device, the TCP port number and the IP address are used by the application server to distinguish the data packet corresponding to the user equipment, and the multiple data transmission bearers are distinguished by using a GTP port number generated by the proxy device or by using a dedicated bearer number.

The proxy device of this embodiment of the present invention may be configured to execute the data transmission method of the foregoing embodiments of the present invention, and for a specific implementation process and a technical effect thereof, reference may be made to the foregoing embodiments of the present invention, which are not described again herein.

It should be noted that, for ease of description, the foregoing method embodiments are described as a series of action combinations. However, persons skilled in the art should understand that the present invention is not limited to the described sequence of the actions, because some steps may be performed in another sequence or performed at the same time according to the present invention. In addition, persons skilled in the art should also understand that all the embodiments described in this specification belong to exemplary embodiments, and the involved actions and modules are not necessarily mandatory to the present invention.

In the foregoing embodiments, the description of each embodiment has respective focuses. For a part that is not described in detail in an embodiment, refer to related descriptions in other embodiments.

Persons of ordinary skill in the art may understand that all or some of the steps of the method embodiments may be implemented by a program instructing related hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A data transmission method, comprising:
receiving, by a proxy device, a first data packet encapsulated by using a first protocol stack;
transforming, by the proxy device, the first data packet into a first data packet encapsulated by using a second protocol stack; and
sending, by the proxy device, the first data packet encapsulated by using the second protocol stack to an application server, wherein the second protocol stack comprises the Transmission Control Protocol TCP protocol, and the first protocol stack does not comprise the TCP protocol.

2. The method according to claim 1, wherein the method further comprises:
establishing, by the proxy device, a TCP connection between the proxy device and the application server.

3. The method according to claim 1 or 2, wherein the first data packet encapsulated by using the first protocol stack and received by the proxy device is sent after one or more data bearers are established between user equipment and a gateway.

4. The method according to any one of claims 1 to 3, wherein the sending, by the proxy device, the first data packet encapsulated by using the second protocol stack to an application server comprises:
sending, by the proxy device, the first data packet encapsulated by using the second protocol stack to the application server by using the TCP connection and the one or more data bearers.

5. The method according to claim 4, wherein after the sending, by the proxy device, the first data packet encapsulated by using the second protocol stack to the application server by using the TCP connection and the one or more data bearers, the method further comprises:
receiving, by the proxy device, a second data packet encapsulated by using a third protocol stack;
transforming, by the proxy device, the second data packet into a second data packet encapsulated by using a fourth protocol stack; and
sending, by the proxy device, the second data packet encapsulated by using the fourth protocol stack to the user equipment, wherein the third protocol stack comprises the Transmission Control Protocol TCP protocol, and the fourth protocol stack does not comprise the TCP protocol.

6. The method according to claim 4, wherein after the sending, by the proxy device, the first data packet encapsulated by using the second protocol stack to the application server by using the TCP connection and the one or more data bearers, the method further comprises:
releasing, by the proxy device, the TCP connection between the proxy device and the application server.

7. The method according to claim 4, wherein
the sending, by the proxy device, the first data packet encapsulated by using the second protocol stack to the application server by using the TCP connection and the one or more data bearers comprises:
sending, by the proxy device, first data packets that are encapsulated by using the second protocol stack and correspond to multiple user equipments to the application server by using the one data transmission bearer and the TCP connection, wherein the first data packets encapsulated by using the second protocol stack each comprise an Internet Protocol IP address and a TCP port number that is generated by the proxy device, and the TCP port number and the IP address are used by the application server to distinguish the data packets corresponding to the user equipments; or
sending, by the proxy device, a first data packet that is encapsulated by using the second protocol stack and corresponds to one user equipment to the application server by using the one data transmission bearer and the TCP connection, wherein the first data packet encapsulated by using the second protocol stack comprises an IP address and a TCP port number that is generated by the proxy device, the TCP port number and the IP address are used by the application server to distinguish the data packet corresponding to the user equipment, and the multiple data transmission bearers are distinguished by using a general packet radio service tunneling protocol GTP port number generated by the proxy device or by using a dedicated bearer number.

8. A data transmission method, comprising:
establishing, by user equipment, a bearer between the user equipment and a packet data gateway P-GW; and
sending, by the user equipment, a first data packet encapsulated by using a first protocol stack to a proxy device by using the bearer, so that the proxy device transforms the first data packet into a first data packet encapsulated by using a second protocol stack, and sends the first data packet encapsulated by using the second protocol stack to an application server, wherein the second protocol stack comprises the Transmission Control Protocol TCP protocol, and the first protocol stack does not comprise the TCP protocol.

9. The method according to claim 8, wherein the method further comprises:
receiving, by the user equipment, a second data packet encapsulated by using the fourth protocol stack and sent by the proxy device, wherein the second data packet encapsulated by using the fourth protocol stack is obtained by the proxy device after the proxy device transforms a received second data packet encapsulated by using a third protocol stack, wherein the third protocol stack comprises the Transmission Control Protocol TCP protocol, and the fourth protocol stack does not comprise the TCP protocol.

10. A proxy device, comprising:
a first transmitting unit, configured to receive a first data packet encapsulated by using a first protocol stack;
a protocol transforming unit, configured to transform the first data packet received by the first transmitting unit into a first data packet encapsulated by using a second protocol stack; and
a second transmitting unit, configured to send the first data packet encapsulated by using the second protocol stack by the protocol transforming unit to an application server, wherein the second protocol stack comprises the Transmission Control Protocol TCP protocol, and the first protocol stack does not comprise the TCP protocol.

11. The proxy device according to claim 10, wherein the proxy device further comprises:
a connection control unit, configured to establish a TCP connection between the proxy device and the application server.

12. The proxy device according to claim 10 or 11, wherein
the first data packet encapsulated by using the first protocol stack and received by the first transmitting unit is sent after one or more data bearers are established between user equipment and a gateway.

13. The proxy device according to any one of claims 10 to 12, wherein the second transmitting unit is specifically configured to send the first data packet encapsulated by using the second protocol stack to the application server by using the one or more data bearers and the TCP connection established by the connection control unit.

14. The proxy device according to claim 13, wherein
the second transmitting unit is further configured to receive a second data packet encapsulated by using a third protocol stack;
the protocol transforming unit is further configured to transform the second data packet received by the second transmitting unit into a second data packet encapsulated by using a fourth protocol stack; and
the first transmitting unit is further configured to send the second data packet encapsulated by using the fourth protocol stack by the protocol transforming unit to the user equipment, wherein the third protocol stack comprises the Transmission Control Protocol TCP protocol, and the fourth protocol stack does not comprise the TCP protocol.

15. The proxy device according to claim 13, wherein the connection control unit is further configured to release the TCP connection between the proxy device and the application server.

16. The proxy device according to claim 13, wherein
the second transmitting unit is specifically configured to send first data packets that are encapsulated by using the second protocol stack and correspond to multiple user equipments to the application server by using the one data transmission bearer and the TCP connection established by the connection control unit, wherein the first data packets encapsulated by using the second protocol stack each comprise an Internet Protocol IP address and a TCP port number that is generated by the proxy device, and the TCP port number and the IP address are used by the application server to distinguish the data packets corresponding to the user equipments; or
the second transmitting unit is specifically configured to send a first data packet that is encapsulated by using the second protocol stack and corresponds to one user equipment to the application server by using the one data transmission bearer and the TCP connection established by the connection control unit, wherein the first data packet encapsulated by using the second protocol stack comprises an IP address and a TCP port number that is generated by the proxy device, the TCP port number and the IP address are used by the application server to distinguish the data packet corresponding to the user equipment, and the multiple data transmission bearers are distinguished by using a GTP port number generated by the proxy device or by using a dedicated bearer number.

17. User equipment, comprising:
a bearer control unit, configured to establish a bearer between the user equipment and a packet data gateway P-GW; and
a sending unit, configured to send a first data packet encapsulated by using a first protocol stack to a proxy device by using the bearer established by the bearer control unit, so that the proxy device transforms the first data packet into a first data packet encapsulated by using a second protocol stack, and sends the first data packet encapsulated by using the second protocol stack to an application server, wherein the second protocol stack comprises the Transmission Control Protocol TCP protocol, and the first protocol stack does not comprise the TCP protocol.

18. The user equipment according to claim 17, wherein the user equipment further comprises:
a receiving unit, configured to receive a second data packet encapsulated by using the fourth protocol stack and sent by the proxy device, wherein the second data packet encapsulated by using the fourth protocol stack is obtained by the proxy device after the proxy device transforms a received second data packet encapsulated by using a third protocol stack, wherein the third protocol stack comprises the Transmission Control Protocol TCP protocol, and the fourth protocol stack does not comprise the TCP protocol.

19. A proxy device, comprising:
a receiver, configured to receive a first data packet encapsulated by using a first protocol stack;
a processor, configured to transform the first data packet received by the receiver into a first data packet encapsulated by using a second protocol stack;
a transmitter, configured to send the first data packet encapsulated by using the second protocol stack by the processor to an application server; and
a bus, connected to the receiver, the processor, and the transmitter, wherein the receiver, the processor, and the transmitter perform data interaction by using the bus, wherein the second protocol stack comprises the Transmission Control Protocol TCP protocol, and the first protocol stack does not comprise the TCP protocol.

20. The proxy device according to claim 19, wherein
the processor is further configured to establish a TCP connection between the proxy device and the application server.

21. The proxy device according to claim 19 or 20, wherein
the first data packet encapsulated by using the first protocol stack and received by the receiver is sent after one or more data bearers are established between user equipment and a gateway.

22. The proxy device according to any one of claims 19 to 21, wherein the transmitter is specifically configured to send the first data packet encapsulated by using the second protocol stack to the application server by using the TCP connection and the one or more data bearers.

23. The proxy device according to claim 22, wherein
the receiver is further configured to receive a second data packet encapsulated by using a third protocol stack;
the processor is further configured to transform the second data packet into a second data packet encapsulated by using a fourth protocol stack; and
the transmitter is further configured to send the second data packet encapsulated by using the fourth protocol stack to the user equipment, wherein the third protocol stack comprises the Transmission Control Protocol TCP protocol, and the fourth protocol stack does not comprise the TCP protocol.

24. The proxy device according to claim 22, wherein the processor is further configured to release the TCP connection between the proxy device and the application server.

25. The proxy device according to claim 22, wherein
the transmitter is specifically configured to send first data packets that are encapsulated by using the second protocol stack and correspond to multiple user equipments to the application server by using the one data transmission bearer and the TCP connection, wherein the first data packets encapsulated by using the second protocol stack each comprise an Internet Protocol IP address and a TCP port number that is generated by the proxy device, and the TCP port number and the IP address are used by the application server to distinguish the data packets corresponding to the user equipments; or
the transmitter is specifically configured to send a first data packet that is encapsulated by using the second protocol stack and corresponds to one user equipment to the application server by using the one data transmission bearer and the TCP connection, wherein the first data packet encapsulated by using the second protocol stack comprises an IP address and a TCP port number that is generated by the proxy device, the TCP port number and the IP address are used by the application server to distinguish the data packet corresponding to the user equipment, and the multiple data transmission bearers are distinguished by using a GTP port number generated by the proxy device or by using a dedicated bearer number.

26. User equipment, comprising:
a processor, configured to establish a bearer between the user equipment and a packet data gateway P-GW;
a transmitter, configured to send a first data packet encapsulated by using a first protocol stack to a proxy device by using the bearer established by processor, so that the proxy device transforms the first data packet into a first data packet encapsulated by using a second protocol stack, and sends the first data packet encapsulated by using the second protocol stack to an application server, wherein the second protocol stack comprises the Transmission Control Protocol TCP protocol, and the first protocol stack does not comprise the TCP protocol; and
a bus, connected to the processor and the transmitter, wherein the processor performs data interaction with the transmitter by using the bus.

27. The user equipment according to claim 26, wherein the user equipment further comprises:
a receiver, configured to receive a second data packet encapsulated by using the fourth protocol stack and sent by the proxy device, wherein the second data packet encapsulated by using the fourth protocol stack is obtained by the proxy device after the proxy device transforms a received second data packet encapsulated by using a third protocol stack, wherein the third protocol stack comprises the Transmission Control Protocol TCP protocol, and the fourth protocol stack does not comprise the TCP protocol.
